# FASCICULE DE BREVET EUROPEEN

(11) **EP 3 226 240 B1**
(45) Date de publication et mention de la délivrance du brevet: **22.05.2019**
(21) Numéro de dépôt: 17161122.1
(22) Date de dépôt: 15.03.2017
(51) Int. Cl.: G10L 15/08, G08G 5/00, G10L 21/0272, G10L 25/48, G10L 15/04, G06F 16/683

(54) **SYSTEME DE SEGREGATION DES MESSAGES AUDIO DANS UN COCKPIT**
SYSTEM ZUR TRENNUNG VON AUDIONACHRICHTEN IN EINEM COCKPIT
SYSTEM FOR SEGREGATING AUDIO MESSAGES IN A COCKPIT

(30) Priorité: 01.04.2016 FR 1600548
(43) Date de publication de la demande: 04.10.2017
(73) Titulaire: Thales, 92400 Courbevoie (FR)
(72) Inventeur: LAFON, Stéphanie, 33700 MERIGNAC (FR); BAILLY, Alexiane, 33700 MERIGNAC (FR); MICHEL, François, 33700 MERIGNAC (FR)
(74) Mandataire: Bréda, Jean-Marc

(56) Documents cités:
- US-A1- 2007 189 328
- US-A1- 2008 045 198
- US-A1- 2011 282 522
- US-A1- 2016 063 999

## Description

Le domaine de l'invention est celui des interfaces homme machine au sein des cockpits d'aéronefs et plus particulièrement des interfaces sonores nécessaires pour la communication à l'intérieur des cockpits.

Actuellement, dans les cockpits d'avion, les interfaces sonores peuvent être émises par le casque des pilotes ou par les hauts parleurs du cockpit. Les sons émis sont multiples et de diverses natures. Ce sont des alertes sonores, des messages audio provenant du contrôle aérien ou « ATC », acronyme signifiant « Air traffic Control », du service automatique de diffusion ou « ATIS », acronyme signifiant « Automatic Terminal Information Service », des pilotes eux-mêmes, du personnel navigant commercial ou « PNC », des mécaniciens ...

On entend par message audio la partie du flux audio ayant un sens. Par exemple, une consigne du contrôleur envoyée sur la fréquence ATC est un message audio. Le problème est que ces différents canaux de réception émettent des flux audio qui sont fusionnés et émis par les hauts parleurs du casque en un unique son stéréo. Les pilotes se focalisent difficilement sur un message sans être déconcentrés par ceux qui sont émis en même temps. Dans ce contexte certaines alertes ou certaines consignes de vol peuvent être mal interprétées ou ignorées. Il est également difficile de savoir qui émet le message.

Dans le domaine aéronautique, pour pallier à ce problème, des postes de commande ou « control panels » physiques, tels que l' « ACP », acronyme de « Audio Control Panel » ou le « RMP », acronyme de « Radio Management Panel », permettent de sélectionner les canaux de réception et de gérer le niveau sonore de chacun d'entre eux.

Dans le domaine aéronautique, ces postes de commande ne sont pas totalement satisfaisants parce que la ségrégation nécessite une intervention du pilote et reste fixe une fois réglée. Par ailleurs, cette ségrégation se fait entre différents flux audio et non pas à l'intérieur d'un même flux. Enfin, elle est uniquement basée sur un réglage du volume.

Dans le domaine grand public une nouvelle solution technologique voit le jour. Il s'agit de la spatialisation des sons. Cette technique se développe notamment pour le home-cinéma. Elle n'offre pas à elle seule une solution répondant aux besoins opérationnels des pilotes et compatible des systèmes avioniques actuels.

Le système d'écoute des messages audio selon l'invention telle que décrite dans les revendications 1 à 7 ne présente pas les inconvénients précédents. C'est un système intelligent d'écoute et de traitement de l'information contenue dans les messages audio. Il permet aussi une restitution de l'information adaptée aux besoins de l'opérateur. Il permet d'assurer une sélection des messages audio selon leur importance au moyen de critères simples.

Plus précisément, l'invention a pour objet un système de ségrégation de messages audio dans un cockpit d'un premier aéronef, ledit système comprenant des moyens de réception et d'enregistrement desdits messages audio, une base de données de mots-clés desdits messages audio, lesdits mots-clés comportant les identifiants du premier aéronef et/ou de seconds aéronefs et des moyens d'écoute desdites messages audio,
caractérisé en ce que le système comporte :
un premier calculateur qui a comme fonctions la reconnaissance des mots-clés desdits messages audio et la séparation desdits messages audio en fonction desdits mots-clés,
un second calculateur qui a comme fonctions le classement desdits messages selon un ordre de priorité et le traitement desdits messages audio selon ledit ordre de priorité et ;
des moyens de transmission aux moyens d'écoute desdits messages traités selon ledit ordre de priorité, l'ordre des priorités des messages audio étant fonction de la distance ou de l'attitude ou de la trajectoire de seconds aéronefs proches du premier aéronef, lesdits seconds aéronefs étant identifiés par les indicatifs de leurs messages audio.

Avantageusement, les mots-clés sont des indicatifs d'aéronef.

Avantageusement, le système comporte des moyens de représentation graphique et des moyens d'affichage des messages audio.

Avantageusement, le traitement d'un message audio consiste en une adaptation de son niveau sonore.

Avantageusement, le traitement d'un message audio consiste en une spatialisation du son dudit message audio.

Avantageusement, le traitement d'un message audio consiste en une modification de la voix lisant ledit message audio.

Avantageusement, la première priorité est attribuée aux messages audio dont l'indicatif est celui du premier aéronef.

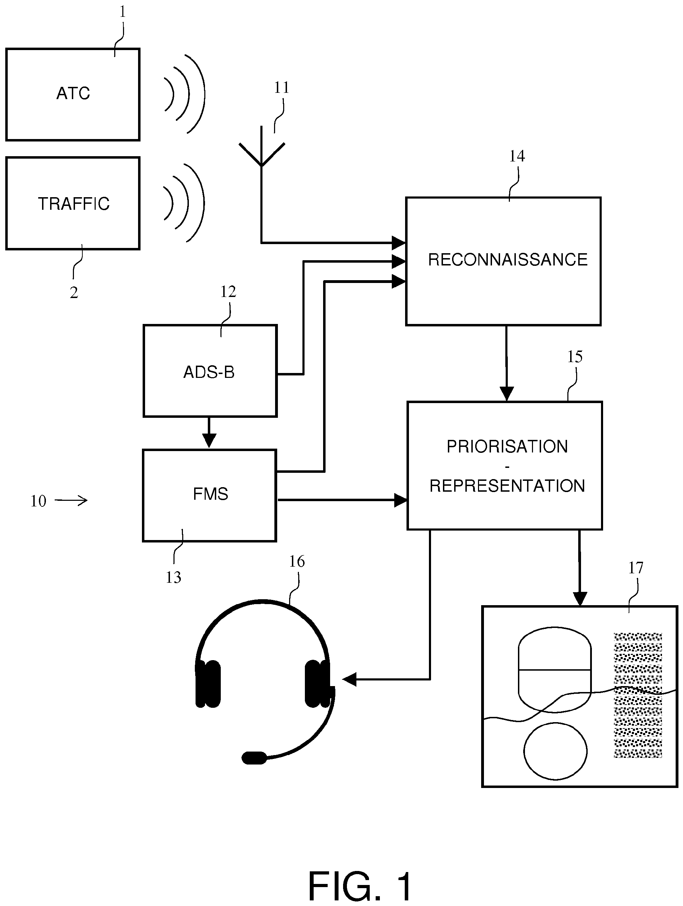

L'invention sera mieux comprise et d'autres avantages apparaîtront à la lecture de la description qui va suivre donnée à titre non limitatif et grâce à la figure 1 annexée qui représente le synoptique général du système de ségrégation de messages audio selon l'invention.

A titre d'exemple non limitatif, la figure 1 représente le synoptique général d'un système 10 de ségrégation de messages audio selon l'invention. Ce système 10 comporte :
- Des moyens de réception 11 des signaux audio ;
- Une ou plusieurs bases de données 12 et 13 ;
- Un premier calculateur 14 ;
- Un second calculateur 15 ;
- Des moyen d'écoute 16 ou de visualisation 17.

Les moyens de réception 11 captent les signaux audio venant de l'extérieur de l'appareil ou de l'intérieur de l'appareil. Les signaux extérieurs ont différentes origines. Ils peuvent être issus du contrôle aérien 1 ou « ATC » ou du service automatique de diffusion 2 ou « ATIS ». Les organes récepteurs sont alors constitués d'antennes réceptrices. Les signaux internes peuvent venir des pilotes eux-mêmes ou du personnel navigant commercial ou PNC. La réception est assurée par des microphones. Ces moyens de réception sont symbolisés par une unique antenne 11 sur la figure 1.

Une ou plusieurs bases de données 12 et 13 comportent au moins les indicatifs ou identifiant des aéronefs ainsi que des mots-clés propres aux échanges aéronautiques. Les indicatifs sont connus sous le terme anglais de « call signs » ou de « tags ». Celui du porteur est fourni par le système de gestion de vol 13 ou « FMS », acronyme signifiant « Flight Management System », les identifiants des autres appareils sont fournis par le système 12 de surveillance de l'espace aérien en charge des informations dites « ADS-B », acronyme signifiant « Automatic Dépendent Surveillance-Broadcast ».

L'ensemble des informations issues des moyens de réception 11 et des bases de données 12 et 13 est traité par un calculateur ou un processeur 14 qui assure les fonctions suivantes :
∘ Mémorisation des signaux audio reçus ;
∘ Repérage des mots-clés dans les signaux reçus. Ces mots-clés appartiennent entre autres à la phraséologie ATC / Pilotes. Ainsi, le système découpe le flux audio en sous messages destinés chacun à un interlocuteur donné. Par ailleurs, ces mots-clés comportent les identifiants. Dans la grande majorité des cas, un message de type aéronautique commence ou finit par l'identifiant de l'émetteur, ce qui facilite sa détection ;
∘ Découpage des signaux audio par identifiant reconnu en sous-messages audio.

Les sous-messages audio sont envoyés à un second calculateur 15 dont les fonctions sont essentiellement :
∘ Classement des messages selon un ordre de priorité dépendant de l'identifiant. Classiquement, la première priorité est attribuée aux messages audio dont l'indicatif est celui de l'aéronef lui-même. Ensuite, l'ordre des priorités des messages audio peut être fonction de la distance ou l'attitude ou de la trajectoire de seconds aéronefs proches de l'aéronef, ces seconds aéronefs étant identifiés par les indicatifs de leurs messages audio. Il est important de prendre en compte ces différents paramètres dans la mesure où, en vol, un avion peut être proche du porteur mais s'en éloigner. De la même façon, sur un aéroport, un avion peut être proche du porteur mais se trouver sur un taxiway parallèle.
∘ Traitement des messages audio en fonction de leur ordre de priorité. Les traitements peuvent être purement audio.
∘ Mémorisation des messages traités pour une écoute ultérieure.

Le traitement le plus simple consiste à ne conserver que les messages les plus importants et à supprimer les autres. Un second traitement consiste à augmenter le son des messages les plus importants ou à baisser le volume des messages considérés comme secondaires. Un troisième traitement consiste à modifier la tonalité des messages.

Enfin, un dernier traitement consiste à spatialiser le son, c'est-à-dire à créer l'illusion que le message audio provient d'une direction déterminée. Par exemple, lorsque le son est envoyé dans un casque audio comportant deux écouteurs, les messages envoyés dans les deux écouteurs peuvent être légèrement décalés dans le temps ou en intensité ou en fréquence pour créer cette illusion. Les messages audio les plus importants peuvent ainsi sembler venir d'une position privilégiée, par exemple devant ou au voisinage de celui qui le reçoit tandis que les messages les moins importants viennent d'une position secondaire, derrière ou sur le coté ou loin de celui qui le reçoit. Cette spatialisation des sons permet de mieux focaliser son attention sur une source donnée. Cet effet est nommé l'effet « Cocktail party ».

Lorsque le casque audio est muni d'un système de détection de position ou d'attitude, l'information d'attitude du casque peut être utilisée de façon à rendre la spatialisation indépendante de la position du casque. Ainsi, l'origine sonore du message apparaît fixe dans l'espace.

Les traitements peuvent être également graphiques. Le message audio est transcrit sous forme de texte, puis ensuite envoyé aux dispositifs de visualisation de l'appareil. Les traitements audio et graphiques peuvent être mis en oeuvre séparément ou simultanément, certains messages étant destinés à être lus et d'autres entendus.

Les différents traitements du signal décrits ci-dessus sont facilement accessibles à l'homme du métier.

Une fois mis en forme, les messages sont envoyés soit aux moyens d'écoute 16 de l'appareil, soit aux différents dispositifs de visualisation de l'appareil. Le principal moyen d'écoute, comme représenté sur la figure 1, est le casque audio des membres de l'équipage. Il existe également des haut-parleurs dans le cockpit.

Les différents dispositifs de visualisation comprennent les grands écrans de visualisation de la planche de bord, les systèmes de visualisation dits « Tête Haute » et les systèmes se visualisation de casque ou de tête.

## Revendications

1. Système (10) de ségrégation de messages audio dans un cockpit d'un premier aéronef, ledit système comprenant des moyens de réception (11) et d'enregistrement desdits messages audio, une base de données de mots-clés (12, 13) desdits messages audio, lesdits mots-clés comportant les identifiants du premier aéronef et/ou de seconds aéronefs et des moyens d'écoute (16) desdites messages audio,
**caractérisé en ce que** le système comporte :
un premier calculateur (14) qui a comme fonctions la reconnaissance des mots-clés desdits messages audio et la séparation desdits messages audio en fonction desdits mots-clés,
un second calculateur (15) qui a comme fonctions le classement desdits messages selon un ordre de priorité et le traitement desdits messages audio selon ledit ordre de priorité et ;
des moyens de transmission aux moyens d'écoute desdits messages traités selon ledit ordre de priorité, l'ordre des priorités des messages audio étant fonction de la distance ou de l'attitude ou de la trajectoire de seconds aéronefs proches du premier aéronef, lesdits seconds aéronefs étant identifiés par les indicatifs de leurs messages audio.

2. Système de ségrégation de messages audio selon la revendication 1, **caractérisé en ce que** les mots-clés sont des indicatifs d'aéronef.

3. Système de ségrégation de messages audio selon l'une des revendications précédentes, **caractérisé en ce que** le système comporte des moyens de représentation graphique et des moyens d'affichage (17) des messages audio.

4. Système de ségrégation de messages audio selon l'une des revendications précédentes, **caractérisé en ce que** le traitement d'un message audio consiste en une adaptation de son niveau sonore.

5. Système de ségrégation de messages audio selon l'une des revendications précédentes, **caractérisé en ce que** le traitement d'un message audio consiste en une spatialisation du son dudit message audio.

6. Système de ségrégation de messages audio selon l'une des revendications précédentes, **caractérisé en ce que** le traitement d'un message audio consiste en une modification de la voix lisant ledit message audio.

7. Système de ségrégation de messages audio selon l'une des revendications précédentes, **caractérisé en ce que** la première priorité est attribuée aux messages audio dont l'indicatif est celui du premier aéronef.

## Patentansprüche

1. System (10) zur Trennung von Audiomeldungen in einem Cockpit eines ersten Luftfahrzeugs, wobei das System Mittel zum Empfangen (11) und zum Aufzeichnen der Audiomeldungen beinhaltet, eine Schlüsselwort-Datenbank (12, 13) der Audiomeldungen, wobei die Schlüsselwörter die Identifikationsdaten des ersten Luftfahrzeugs und/oder von zweiten Luftfahrzeugen und Mittel zum Abhören (16) der Audiomeldungen beinhaltet,
**dadurch gekennzeichnet, dass** das System Folgendes beinhaltet:
einen ersten Rechner (14), welcher als Funktionen die Erkennung der Schlüsselwörter der Audiomeldungen und die Trennung der Audiomeldungen angesichts der Schlüsselwörter besitzt,
einen zweiten Rechner (15), welcher als Funktionen das Klassifizieren der Meldungen in einer Prioritätsreihenfolge und die Verarbeitung der Audiomeldungen entsprechend der Prioritätsreihenfolge besitzt; und
Mittel zum Übertragen an die Abhörmittel der entsprechend der Prioritätsreihenfolge verarbeiteten Meldungen, wobei die Prioritätsreihenfolge der Audiomeldungen von dem Abstand oder der Fluglage oder der Flugbahn zweiter Luftfahrzeuge, welche dem ersten Luftfahrzeug nahe sind, abhängt, wobei die zweiten Luftfahrzeuge durch die Kennungen ihrer Audiomeldungen identifiziert werden.

2. System zur Trennung von Audiomeldungen nach Anspruch 1, **dadurch gekennzeichnet, dass** die Schlüsselwörter Kennungen von Luftfahrzeugen sind.

3. System zur Trennung von Audiomeldungen nach einem der vorhergehenden Ansprüche, **dadurch gekennzeichnet, dass** das System Mittel zur grafischen Darstellung und Mittel zur Anzeige (17) der Audiomeldungen beinhaltet.

4. System zur Trennung von Audiomeldungen nach einem der vorhergehenden Ansprüche, **dadurch gekennzeichnet, dass** die Verarbeitung einer Audiomeldung in einer Anpassung ihres Lautstärkepegels besteht.

5. System zur Trennung von Audiomeldungen nach einem der vorhergehenden Ansprüche, **dadurch gekennzeichnet, dass** die Verarbeitung einer Audiomeldung in einer Spatialisierung des Klangs der Audiomeldung besteht.

6. System zur Trennung von Audiomeldungen nach einem der vorhergehenden Ansprüche, **dadurch gekennzeichnet, dass** die Verarbeitung einer Audiomeldung in einer Modifizierung der Stimme, welche die Audiomeldung liest, besteht.

7. System zur Trennung von Audiomeldungen nach einem der vorhergehenden Ansprüche, **dadurch gekennzeichnet, dass** die oberste Priorität denjenigen Meldungen zugewiesen wird, deren Kennung diejenige des ersten Luftfahrzeugs ist.

## Claims

1. System (10) for segregating audio messages in a cockpit of a first aircraft, the system comprising means (11) for receiving and recording said audio messages, a database of key words (12, 13) of said audio messages, said key words comprising the identifiers of the first aircraft and/or second aircraft and means (16) for listening to said audio messages,
**characterised in that** the system comprises:
a first processor (14) which has as functions the recognition of the key words from said audio messages and the separation of said audio messages in accordance with said key words,
a second processor (15) which has as functions the classification of said messages in accordance with an order of priority and processing said audio messages in accordance with said order of priority, and;
means for transmitting said messages processed in accordance with said order of priority to the listening means, the order of priority of the audio messages being a function of the distance or the attitude or the trajectory of second aircraft close to the first aircraft, the second aircraft being identified by the indicators of their audio messages.

2. System for segregating audio messages according to claim 1, **characterised in that** the key words are aircraft indicators.

3. System for segregating audio messages according to either of the preceding claims, **characterised in that** the system comprises means for graphic representation and means (17) for display of the audio messages.

4. System for segregating audio messages according to any one of the preceding claims, **characterised in that** the processing of an audio message involves an adaptation of the sound level thereof.

5. System for segregating audio messages according to any one of the preceding claims, **characterised in that** the processing of an audio message involves a spatialisation of the sound of the audio message.

6. System for segregating audio messages according to any one of the preceding claims, **characterised in that** the processing of an audio message involves a modification of the voice reading the audio message.

7. System for segregating audio messages according to any one of the preceding claims, **characterised in that** the first priority is attributed to the audio messages whose indicator is that of the first aircraft.
